# EUROPEAN PATENT APPLICATION

(11) **EP 1 204 053 A1**
(43) Date of publication of application: **08.05.2002**
(21) Application number: 01109921.5
(22) Date of filing: 24.04.2001
(51) Int. Cl.: G06F 17/60

(54) **Method and apparatus for handling a plurality of test modes for a computer readable document**

(30) Priority: 03.11.2000 DE 1203924
(71) Applicant: SUN MICROSYSTEMS, INC., Palo Alto, California 94303 (US)
(72) Inventor: Breuer, Matthias, 21220 Seevetal (DE); Kuemmel, Andre, 26121 Oldenburg (DE)
(74) Representative: Betten & Resch

(57) **Abstract**

A computer-implemented method of processing a document provides a user with a plurality of nested test modes for creating, reviewing and retrieving a plurality of different document configurations represented by different document data sets. The nested test modes are activated upon user request and a starting data set of the document is stored on a memory and restored after leaving the test mode. By nesting a plurality of test modes, the user can create a plurality of different configurations of a document and easily retrieve the data of every one of these configurations.

## Description

### FIELD OF THE INVENTION

The present invention relates to the handling of a plurality of alternative test configurations for a computer readable document like a text document, a spreadsheet document or the like.

### DESCRIPTION OF THE RELATED ART

Many computer programs allow the creation of documents containing a plurality of depending numbers for different, related configurations of the document. Examples of such programs are tax calculation programs with a fixed set of input and output options or spreadsheet programs which form the basis for implementation of any kind of calculation application. If a user applies such a program for carrying out complex calculations with a large number of related parameters, it is likely that the user at some stage wants to "test" what effect some parameter changes have on the whole calculation. Such programs like tax calculation programs offer a "test" or "what if" mode for this purpose. The user activates the "what if" mode, changes one or a plurality of input parameters, carries out the calculation based on these amended parameters and checks the result of the calculation. If the user closes or exits the "what if" mode, the changed parameters are reset to their initial values. If the user has activated the "what if" mode, it could happen that he wants to test some different parameter values but wishes to return to the current parameter configuration. The user then has only two options. Either he can end the "what if" mode and start over from scratch or he can back up parameter by parameter until he is back at the forking point. The larger the number of test paths, the more complicated the handling for the user becomes.

It would therefore be desirable to provide a more user-friendly handling of different test configurations of documents having a large number of parameters dependent on other parameters.

### SUMMARY OF THE INVENTION

According to the present invention, there is provided a computer-implemented method of processing a document providing a user a plurality of nested test modes for creating, reviewing and retrieving a plurality of different document configurations based on different document data sets, the method comprising activating a first test mode upon user request, automatically storing the starting document data set of the first test mode, changing the document data upon user input of amended data, activating a second test mode upon user request, automatically storing the starting document data set of the second test mode, changing the document data upon user input of amended data, restoring the starting document data set of the second test mode upon leaving the second test mode, and restoring the first document starting data set upon leaving the first test mode.

The invention further provides a computer-implemented method of processing a document providing a user a plurality of nested test modes for creating, reviewing and retrieving a plurality of different document configurations based on different document data sets, the method comprising the steps of activating a first test mode upon user request, automatically storing the starting document data set of the first test mode, changing the document data upon user input of amended data, activating a second test mode upon user request, automatically storing the starting document data set of the second test mode, changing the document data upon user input of amended data, restoring the starting document data set of the second test mode upon leaving the second test mode, and restoring the first document starting data set upon leaving the first test mode.

A plurality of nested test modes means that a test mode can be opened while at the same time an earlier test mode is still open. A sequence of multiple derived test modes can therefore be created.

The user can thus activate a new test mode at any time even if he is already in a test mode. It is therefore possible to return to any desired document configuration. It is not necessary to know in advance where a test mode should be started. The handling of complex documents with many different properties depending on the value of some parameters is therefore greatly facilitated.

The document may be a spreadsheet document containing data arranged in a table, a text document, an internet page or any other type of document. The different configurations of the document may represent different formatting options of the document. With the invention it is then easily possible to test a plurality of different formatting options of e.g. a publishing document, to initiate a test mode at any time a "promising" formatting configuration has been reached and to test further variations based on this configuration.

According to a particular embodiment all different data configurations of the document within a test mode are stored and can subsequently be accessed by the user. The user can then "go along" the path of variations he has created within the test mode, for example by operating forward and backward keys.

According to a particular embodiment of the invention the different test modes may be represented as a tree structure and displayed on a display screen. The user can then select a desired one of the displayed test modes. A specific tool for navigating to the displayed test modes may be provided. Additionally, it may be possible to further gain access to different configurations within one test mode through the displayed structure of test modes.

According to a further specific embodiment the test modes and the corresponding data configurations are stored together with the document on a memory like a hard disk or a CD- or DVD-Rom. The user can then access the starting configurations of all test modes also when he opens a document at a future working session.

A further implementation of the present invention provides a computer system for processing a document providing a user with a plurality of nested or derived test modes for creating, reviewing and retrieving a plurality of different configurations of the document represented by different data sets, the computer system comprising a memory for storing the document data and a processing unit for carrying out opening a document, activating a first test mode upon user request, automatically storing the starting document data set of the first test mode, changing the document data upon user input of amended data, activating a second test mode upon user request, automatically storing the starting document data set of the second test mode, changing the document data upon user input of amended data, restoring the starting document data set of the second test mode upon leaving the second test mode, and restoring the first document starting data set upon leaving the first test mode.

A still further implementation of the present invention may be realized by a computer program for processing a computer-readable document providing a user with a plurality of nested test modes for creating, reviewing and retrieving a plurality of different configurations of the document represented by different document data sets, said computer program comprising program code for activating a first test mode upon user request, automatically storing the starting document data set of the first test mode, changing the document data upon user input of amended data, activating a second test mode upon user request, automatically storing the starting document data set of the second test mode, changing the document data upon user input of amended data, restoring the starting document data set of the second test mode upon leaving the second test mode, and restoring the first document starting data set upon leaving the first test mode.

A program code may be embodied in any form of computer program product. A computer program product comprises a medium which stores or transports computer-readable code, or in which computer-readable code can be embedded. Some examples of computer program products are CD-ROM or DVD-ROM disks, ROM charts, floppy disks, magnetic tapes, computer hard drives, servers on a network and signals transmitted over the network representing a computer-readable program code.

The above-mentioned and other features, utilities and advantages of the present invention will become more readily apparent from the following detailed description of preferred embodiments thereof in connection with the accompanying drawings.

### BRIEF DESCRIPTION OF THE DRAWINGS

Fig. 1 schematically illustrates a spreadsheet.
Fig. 2 schematically illustrates the method steps of an embodiment of the present invention.
Fig. 3 schematically illustrates the method steps of a further embodiment of the present invention.
Fig. 4 schematically illustrates a tree representation of different test modes according to an embodiment of the present invention.
Fig. 5 schematically illustrates different formatting versions of a document representing different test modes according to an embodiment of the invention.
Fig. 6 is a schematic illustration of a computer system to which the present invention may be applied.
Fig. 7 is a schematic illustration of a client-server-configuration to which the present invention may also be applied.

### DETAILED DESCRIPTION OF PREFERRED EMBODIMENTS

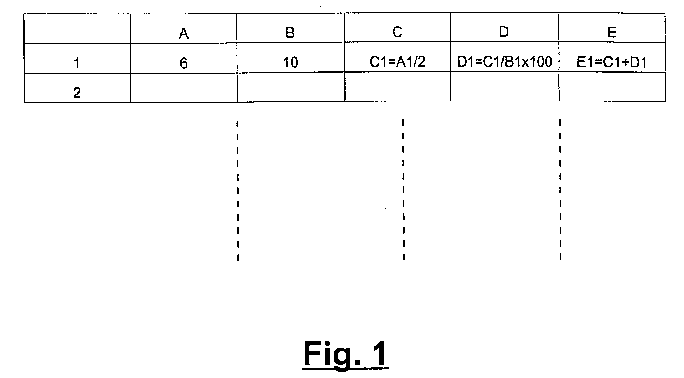

Fig. 1 schematically illustrates as an example of a document having a plurality of parameters a spreadsheet document comprising rows 1, 2, 3, ... and columns A, B, C etc. In the example shown in Fig. 1 the cells A1 and B1 comprise parameter values 6 and 10, respectively. The content of the cells C1, D1 and E1 are calculated on the basis of the parameter values A 1 and B 1. In the present example C1 has the value 3, D1 30 and E1 33. If the user wishes to know the end result E1 based on a different set of parameters values A, B, the user may, for example replace value A1 = 6 by A1 =7. If the user then wants to see the result for the combination of parameters A1 = 6 and B1 =12 the values of both cells A1 and B1 have to be changed and the calculation carried out accordingly.

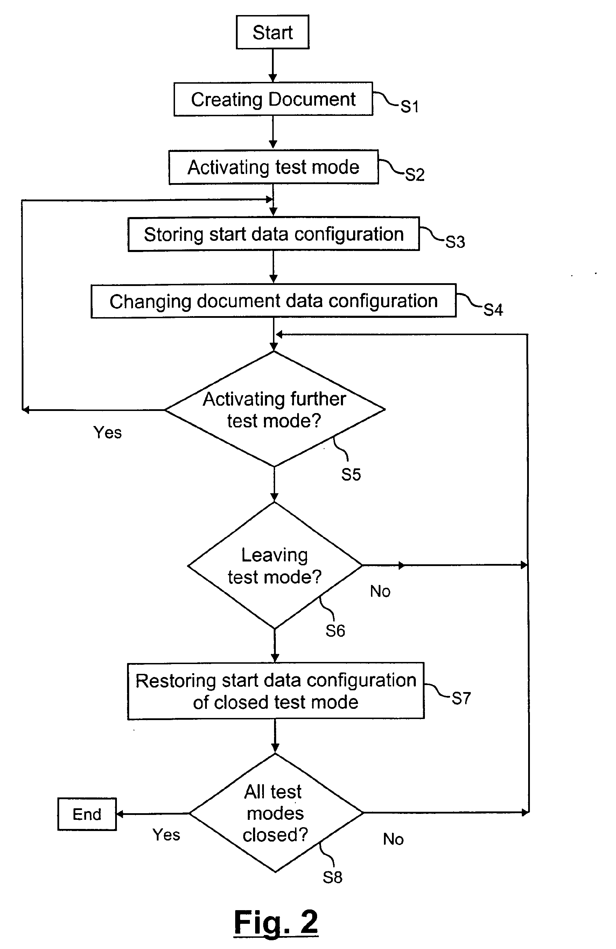

A first embodiment of the invention is now explained with reference to the flowchart of Fig. 2.

If a user, after having created or opened a document in method step S 1, wishes to carry out a calculation like the spreadsheet shown in Fig. 1 with some alternative values, he can activate the test mode in step S 2. The data configuration of the document the user presently works on is then stored as the starting data configuration of the test mode. If the test mode is closed, the system automatically returns to this starting data configuration. Therefore, the user can always be sure that he can return to this data configuration irrespective of the amendments he makes in the test mode. The user may then make any changes to the data configuration he wishes in step S 4 and initiate corresponding test calculations. He may come to a point where he likes to "save" a second data configuration while at the same time going on with further alternative data sets. It is then possible, in method step S 5, to activate a further, nested test mode working in the same way as the first test mode. Upon leaving the second test mode, the starting data configuration of this test mode is restored. The user can, according to this embodiment, open as many test modes as he wishes. If he decides to leave the current test mode (step S 6), then the starting data configuration of the latest test mode is restored in method step S 7. The user can then carry on the work, introducing further parameter amendments or open new test modes. If the test mode which has been opened first is closed, then the starting data configuration of this first test mode is restored.

If, according to the present invention, a test mode is activated upon user request, the computer system first checks which documents are presently opened and on which document (spreadsheet, text document or others) the user presently works on. Then it is checked what parameters have been defined in this document, e.g. which cells of a spreadsheet table contain independent values. In the simple example of Fig. 1, only cells A1 and B1 contain independent parameter values and therefore have to be saved for the test mode. Then the system creates a data set containing all those data necessary to completely define the starting data configuration of the document together with an identifier, for example "test mode 1" which allows assigning the stored data configuration to a particular test mode.

If the computer program for processing the document the user is presently working on comprises a so-called "undo" function which allows the immediate correction of the latest user action, the present invention may be implemented using this "undo" function as follows. The "undo" function creates a stack of "old" versions of the document. Instead of storing the document data configuration upon initiating the test mode, the pointer to the corresponding data configuration of the document in the "undo" stack is provided. It is also possible to use the versions of the document which have already been saved in connection with the "undo" function and therefore to save memory space. In addition, the present invention can be implemented quite easily in case such "undo" function exists.

When the user inputs a command to leave a test mode by pressing a corresponding key or clicking on a corresponding key area on the screen, the system checks which test mode is closed (for example test mode 3), retrieves the corresponding starting data configuration and changes all independent and dependent parameters of the document to the values based on this starting data configuration. When leaving the test mode, the user therefore has the same document with the same parameter values as when entering this particular test mode. If new dependent values have been created during the test mode, however, these new dependent values are not removed upon closing the test mode but updated based on the original independent parameter values.

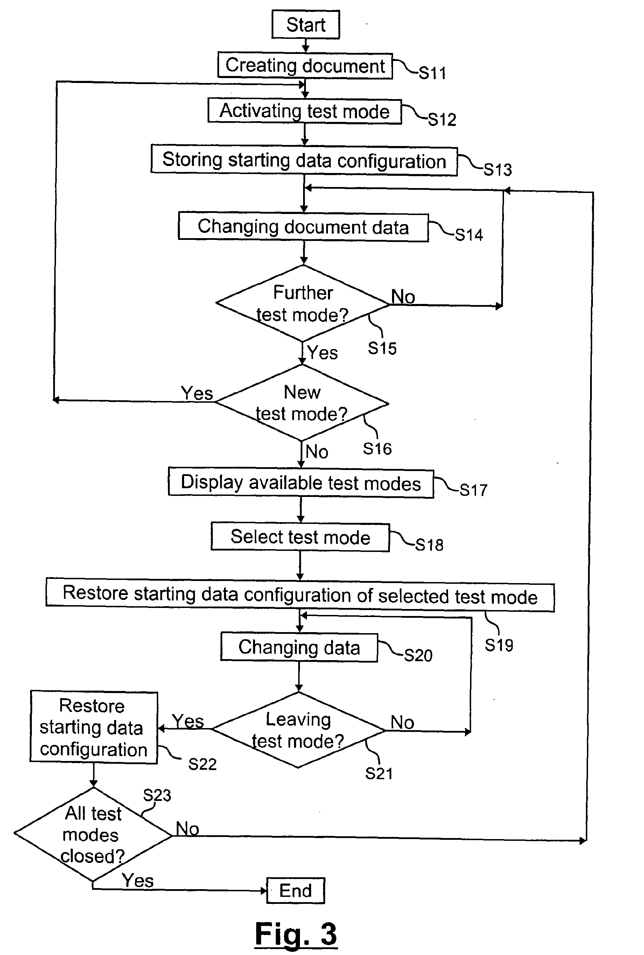

The flowchart of Fig. 3 illustrates a further embodiment of the present invention. After creating or opening a document in method step S 11, a first test mode is activated upon user command in method step S 12. As in the first embodiment, the starting data configuration is subsequently stored in method step S 13. The user can then enter parameter changes and carry out corresponding calculations in step S 14 and/or activate further test modes in step S 15.

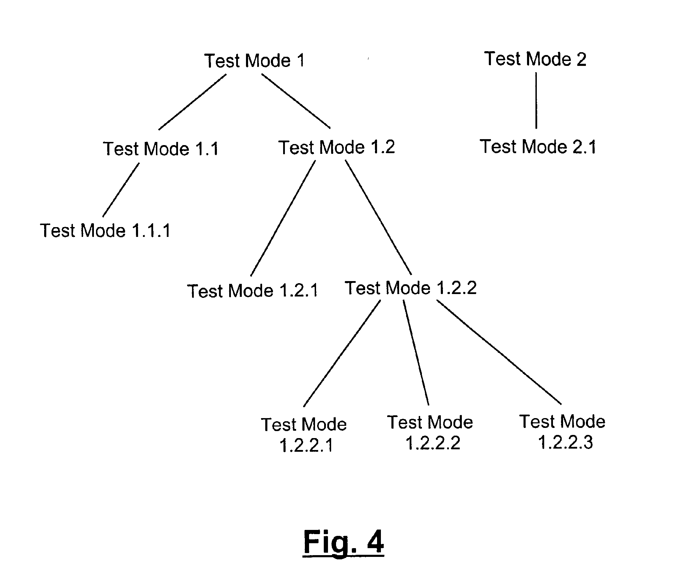

With this embodiment, it is also possible to display on a display screen the test modes which have already been created for the document on which the user currently works. This display may be in the form of a tree structure as illustrated in Fig. 4. For complex documents like tax calculations or the like it may be useful to use a large number of nested test modes in order to carry out tax calculations for a large number of different parameter variations. For these cases, the display of the different test modes in a tree structure as illustrated in Fig. 4 allows a user to get an overview of the different test modes. The tree structure represents the parameter variations of the different test modes. Test mode 1 and test mode 2 correspond to different values of the same parameter. Test modes 1.1 and test mode 1.2 implement variations of a second parameter and test modes 1.2.1 and 1.2.2 different values of a third parameter etc.

According to a particular embodiment of the present invention, a navigation tool may be provided for the user to navigate, for example by movement of a mouse device or the like, between the different test modes. The navigating tool may comprise a unit for detecting the current mouse position, a unit directing the cursor following the mouse position, a unit for detecting the cursor position on the displayed tree structure of test modes. If the cursor position is on one of the test modes, an additional table may be displayed showing the parameter values corresponding to this test mode. Similar navigation tools are used in many different types of computer programs.

Using this displayed tree structure and a corresponding navigation tool, the user may then select a particular one of the test modes of the document (step S 18 in Fig. 3). In contrast to the embodiment explained with reference to Fig. 2, it is therefore possible to change arbitrarily between all the test modes which so far have been created. After selection of a particular test mode, the starting data configuration of this mode is restored in step S 19 and the user can go on working based on this parameter set. When the user leaves the test mode, the starting data set is restored in method step S 22. The embodiment of Fig. 3 is therefore particularly useful for complex documents where a large number of test modes involving many different parameters are created.

According to a further embodiment, it is possible to automatically store not only the starting data configuration but every data configuration of the document the user creates within a test mode. The user can then track the test calculations he has made in forward in backward direction.

According to a still further embodiment it is possible to store the data configurations of the test modes together with the document in a permanent storage device.

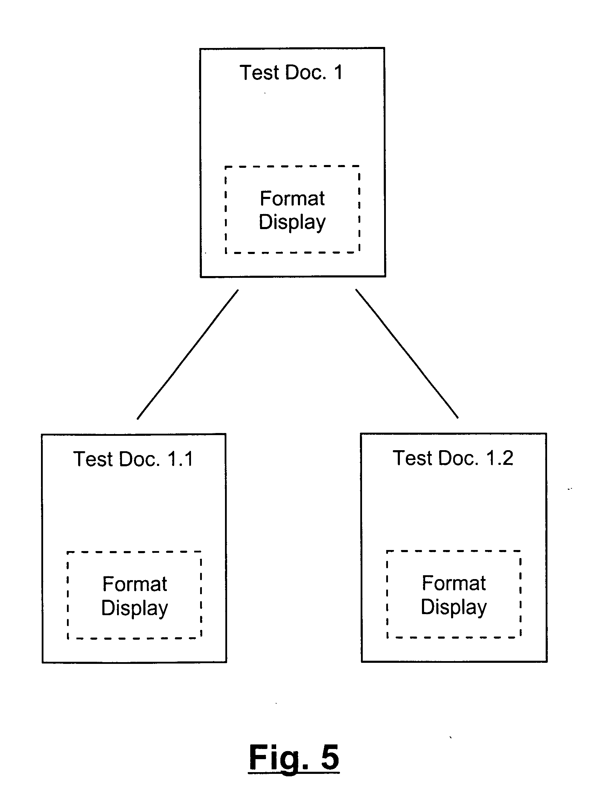

The present invention is not only applicable to documents involving complex calculations like spreadsheet documents. The test modes may for example be also applied to different formatting variations of a document. The user can so try out different formatting options including character fonts, graphics, paragraphs etc., save promising versions as test modes or test documents and try out further improvements based on these test documents. The different test documents may be displayed as shown in Fig. 5. The test documents are represented as tree structure including an area in which indications of the selected format like character font or paragraph layout are displayed. Alternatively, it is also possible to display a test page of the document when the cursor touches a document area. It is so possible for the user to easily review the different formatting options of the document.

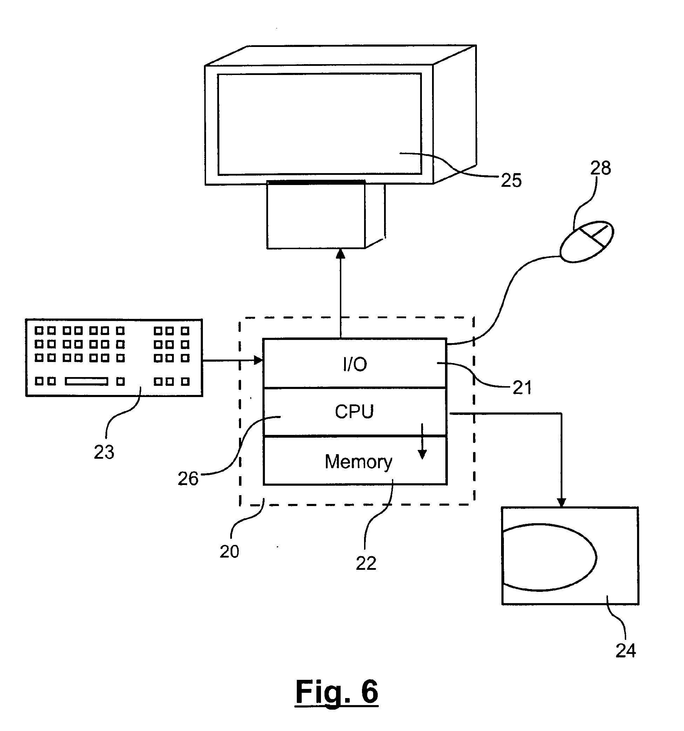

The present invention is applicable to a hardware configuration like a personal computer or a work station as illustrated schematically in Fig. 6. The computer may comprise a central processing unit CPU 26, an input output I/O unit 21, an internal memory 22 and an external memory 24. The computer may further comprise standard input devices like a keyboard 23, a mouse 28 or a speech processing means (not illustrated).

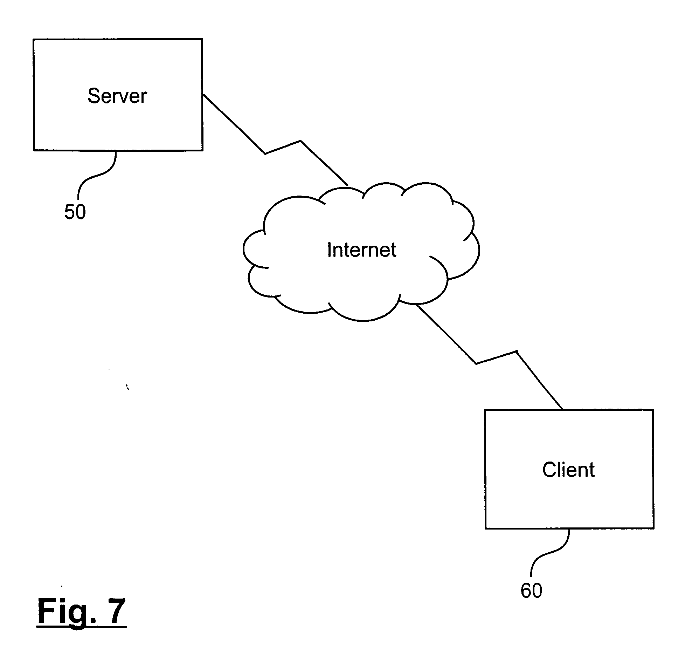

The invention, however, may also be applied to a client-server configuration as illustrated in Fig. 7. The document may be displayed on a display screen of a client device 60 while some or all steps of the method as illustrated before in connection with Figs. 2 and 3 are carried out on a server computer accessible by a client device over a data network as the internet using a browser application or the like.

While the invention has been shown with reference to particular embodiments thereof, it will be understood by those skilled in the art that various other changes in the form and details may be made therein without departing from the spirit and scope of the invention.

## Claims

1. A computer-implemented method of processing a document providing a user a plurality of nested test modes for creating, reviewing and retrieving a plurality of different document configurations based on different document data sets, the method comprising:
- activating a first test mode upon user request,
- automatically storing the starting document data set of the first test mode,
- changing the document data upon user input of amended data,
- activating a second test mode upon user request,
- automatically storing the starting document data set of the second test mode,
- changing the document data upon user input of amended data,
- restoring the starting document data set of the second test mode upon leaving the second test mode, and
- restoring the first document starting data set upon leaving the first test mode.

2. The method of claim 1, wherein more than two nested test modes are available.

3. The method of claim 1 or 2, wherein said document is a spreadsheet document.

4. The method of claim 1 or 2, wherein the different document data sets correspond to different formatting options of a document.

5. The method of one of claims 1 to 4, wherein all document data set configurations within a test mode are stored and accessible upon user request.

6. The method of claim 5, further comprising recognizing and storing the order of creation of different document data set configurations within a test mode.

7. The method of claim 6, enabling the user to move forward and backward between different stored document data set configurations within a test mode.

8. The method of one of claims 5 to 7, comprising arranging stored document data set configurations as a tree structure.

9. The method of claim 8, comprising displaying the tree structure on a display medium and enabling the user to select particular document data set configurations represented by the tree structure using a graphical user interface.

10. The method of claim 8 or 9, comprising assigning an identification name or number to the branching points of the tree structure, wherein every branching point represents a document data structure configuration.

11. The method of one of claims 8 to 10, comprising providing the user a navigation tool for jumping between different branching points of the tree structure.

12. The method of one of claims 1 to 11, comprising storing the document data set configuration on a storage medium together with the document itself.

13. The method of one of claims 1 to 12, allowing selection of different storing options.

14. A computer system for processing a document providing a user with a plurality of nested test modes for creating, reviewing and retrieving a plurality of different configurations of the document represented by different data sets, the computer system comprising a memory (22) for storing the document data and a processing unit (26) for carrying out the steps of:
- opening a document
- activating a first test mode upon user request,
- automatically storing the starting document data set of the first test mode,
- changing the document data upon user input of amended data,
- activating a second test mode upon user request,
- automatically storing the starting document data set of the second test mode,
- changing the document data upon user input of amended data,
- restoring the starting document data set of the second test mode upon leaving the second test mode, and
- restoring the first document starting data set upon leaving the first test mode.

15. The computer system of claim 14, wherein more than two nested test modes are available.

16. The computer system of claim 14 or 15, wherein said document is a spreadsheet document.

17. The computer system of claim 14 or 15, wherein the different document data sets correspond to different formatting options of a document.

18. The computer system of one of claims 14 to 17, wherein all document data set configurations of a test mode are stored and accessible upon user request.

19. The computer system of claim 18, further comprising recognizing and storing the order of creation of different document data set configurations within a test mode.

20. The computer system of claim 19, enabling the user to move forward and backward between different stored document data set configurations within a test mode.

21. The computer system of one of claims 18 to 20, comprising arranging stored document data set configurations as a tree structure.

22. The computer system of claim 21, comprising a display means for displaying the tree structure and enabling the user to select particular document data set configurations represented by the tree structure using a graphical user interface.

23. The computer system of claim 21 or 22, comprising assigning an identification name or number to the branching points of the tree structure, wherein every branching point represents a document data structure configuration.

24. The computer system of one of claims 21 to 23, comprising providing a navigation tool for jumping between different branching points of the tree structure.

25. The computer system of one claims 14 to 24, comprising a permanent storage medium for storing the document data set configuration information together with the document itself.

26. The computer system of one of claims 14 to 25, allowing selection of different storing options.

27. A computer program product for processing a computer-readable document providing a user a plurality of nested test modes for creating, reviewing and retrieving a plurality of different configurations of the document represented by different document data sets, said computer program comprising program code for:
- activating a first test mode upon user request,
- automatically storing the starting document data set of the first test mode,
- changing the document data upon user input of amended data,
- activating a second test mode upon user request,
- automatically storing the starting document data set of the second test mode,
- changing the document data upon user input of amended data,
- restoring the starting document data set of the second test mode upon leaving the second test mode, and
- restoring the first document starting data set upon leaving the first test mode.

28. A computer program comprising program code for carrying out the method of any one of claims 1 to 13.
